# EUROPÄISCHE PATENTSCHRIFT

(11) **EP 3 966 671 B1**
(45) Veröffentlichungstag und Bekanntmachung des Hinweises auf die Patenterteilung: **03.12.2025**
(21) Anmeldenummer: 21725047.1
(22) Anmeldetag: 03.05.2021
(51) Int. Cl.: G06F 3/01, G06F 3/038, G06F 3/0338, G05G 9/047, B60N 2/02, G05G 1/04

(54) **BEDIEN- UND/ODER EINGABEVORRICHTUNG UND VERFAHREN ZU DEREN BETRIEB**
CONTROL AND/OR INPUT DEVICE, AND METHOD FOR ITS OPERATION
DISPOSITIF DE CONTRÔLE ET/OU D'ENTRÉE DE DONNÉES, ET PROCÉDÉ D'OPERATION

(30) Priorität: 22.05.2020 DE 102020003052
(43) Veröffentlichungstag der Anmeldung: 16.03.2022
(73) Patentinhaber: Marquardt GmbH, 78604 Rietheim-Weilheim (DE)
(72) Erfinder: KÄFER, Wolfgang, 78166 Donaueschingen (DE); AMADIO, Manuel, 78052 Villingen - Schwenningen (DE); SCHOSSAU, Vinko, 78315 Radolfzell (DE); HAUSMANN, Alexander, 78073 Bad Dürrheim (DE)
(74) Vertreter: Staeger & Sperling Partnerschaftsgesellschaft mbB
(86) Internationale Anmeldenummer: PCT/EP2021/061528
(87) Internationale Veröffentlichungsnummer: WO 2021/233665

(56) Entgegenhaltungen:
- EP-B1- 3 040 107
- EP-B1- 3 187 979
- EP-B1- 3 286 623
- WO-A1-2007/122773
- DE-A1- 102017 109 939

## Beschreibung

Die Erfindung geht aus von einem Verfahren zum Betrieb einer Bedien- und/oder Eingabevorrichtung nach dem Oberbegriff des Patentanspruchs 1. Eine solcherart betriebene Bedien- und/oder Eingabevorrichtung lässt sich insbesondere für ein Kraftfahrzeug verwenden. Beispielsweise kann die Bedien- und/oder Eingabevorrichtung zur Verstellung eines Sitzes in der Art eines Sitzverstellschalters im Kraftfahrzeug dienen.

Eine derartige Bedien- und/oder Eingabevorrichtung weist eine bewegbare Handhabe auf. Die Handhabe ist insbesondere in der Art eines Steuerknüppels, eines Joysticks o. dgl. von einem Benutzer manuell bewegbar. Und zwar ist die Handhabe aus einer von mehreren Ausgangspositionen, die innerhalb eines Bereichs um einen Koordinaten-Nullpunkt liegen, in wenigstens einer Verstellrichtung bis zu einer Verstellposition bewegbar. Zur Bewegung der Handhabe ist ein korrespondierendes Signal erzeugbar. Das Signal dient dann für die Steuerung eines Geräts im Kraftfahrzeug und/oder dient in der Art eines Schaltsignals in der Verstellposition zum Bedienen und/oder Auslösen einer Funktion im Kraftfahrzeug. Die Handhabe ist bei Beendung der Bewegung, also insbesondere nachdem der Benutzer diese losgelassen hat, in eine Ausgangsposition der innerhalb des Bereichs liegenden Ausgangspositionen rückstellbar. Aufgrund von Toleranzen wird bei der Rückstellung der Handhabe im Allgemeinen nicht der exakte Koordinaten-Nullpunkt erreicht, sondern eine zufällige Ausgangsposition der innerhalb des Bereichs liegenden Ausgangspositionen.

Dieser Bereich bildet somit die Nullpunkt-Toleranz für die Handhabe ab. Unter Berücksichtigung der Nullpunkt-Toleranz werden beim bisherigen Verfahren zum Betrieb der Bedien- und/oder Eingabevorrichtung die Positionskoordinaten für die Bewegung der Handhabe in Bezug auf den Koordinaten-Nullpunkt außerhalb des Bereichs in der Art einer Nullpunkt-Schwelle ermittelt. Diese derart ermittelten Positionskoordinaten werden anschließend zur Detektierung der Verstellrichtung und/oder der Verstellposition für die Handhabe ausgewertet.

Es hat sich nun herausgestellt, dass manche Bewegungen der Handhabe auf diese Weise nicht detektierbar sind. Insbesondere eignet sich das bisherige Verfahren zum Betreiben der Bedien- und/oder Eingabevorrichtung nicht zur Erkennung von feinfühligen Bewegungen der Handhabe.

Verschiedene weitere Bedien- und/oder Eingabevorrichtungen, Verfahren zum Betrieb solcher Vorrichtungen sowie Aspekte betreffend solche Verfahren und Vorrichtungen sind im Stand der Technik beispielsweise durch die Schriften EP 3 040 107 B1, EP 3 187 979 B1, DE 10 2017 109 939 A1, EP 3 286 623 B1 und WO 2007/122773 A1 gegeben.

Der Erfindung liegt die Aufgabe zugrunde, das Verfahren zum Betrieb einer Bedien- und/oder Eingabevorrichtung derart weiterzuentwickeln, dass die Detektierung der Bewegung der Handhabe verbessert ist.

Diese Aufgabe wird mit einem erfindungsgemäßen Verfahren zum Betrieb einer Bedien- und/oder Eingabevorrichtung aufweisend die Merkmale des Anspruchs 1 gelöst.

Beim erfindungsgemäßen Verfahren zum Betrieb einer Bedien- und/oder Eingabevorrichtung werden zusätzlich die Positionskoordinaten für die Bewegung der Handhabe innerhalb des Bereichs um den Koordinaten-Nullpunkt ermittelt. Diese zusätzlich ermittelten Positionskoordinaten werden für die Auswertung zur Detektierung der Verstellrichtung und/oder der Verstellposition ebenfalls herangezogen. Vorteilhafterweise werden dadurch bisher nicht detektierbare Verstellungen der Handhabe erkannt, insbesondere wird dadurch eine feinfühlige Detektierung der Bewegung der Handhabe ermöglicht. Weitere Ausgestaltungen der Erfindung sind Gegenstand der Unteransprüche.

Zwecks weiterer Verbesserung der Feinfühligkeit der Bewegungserkennung werden die Positionskoordinaten bei der Bewegung der Handhabe kontinuierlich ermittelt, also ständig ausgelesen. Alternativ oder auch zusätzlich werden, der einfachen Verarbeitbarkeit halber, die Positionskoordinaten in vorgegebenen Zeitintervallen ermittelt werden.

Zwecks Bereitstellung verschiedener Funktionalitäten für die Bedien- und/oder Eingabevorrichtung erfolgt die Auswertung der Positionskoordinaten fortlaufend auf die Übereinstimmung mit einem vorgegebenen Muster. Bei dem Muster handelt es sich um eine Gerade, eine stufenartige Bahn oder eine gekrümmte Bahn. Bei Erkennung eines entsprechenden Musters wird dann die zum Muster korrespondierende Schaltfunktion ausgelöst.

In einfacher Weise können für die Erkennung eines Musters Prinzipien und/oder Algorithmen zur Bilderkennung verwendet werden. Beispielsweise kann zur Erkennung einer Geraden ein Korridor definiert werden, innerhalb dessen ein bestimmter Anteil an ermittelten Positionskoordinaten liegen muss. Zwecks sicherer und/oder robuster Auswertung können für die Erkennung eines Musters Boole'sche Bedingungen verwendet werden. Insbesondere sind hierfür Boole'sche UND- Bedingungen vorteilhaft zu verwenden. Beispielweise wird ein erkanntes Muster, wie eine Gerade, erst dann verifiziert, wenn die Positionskoordinaten sich über einen bestimmten Koordinatenbereich erstrecken. Ein Kriterium zur Festlegung dieses Koordinatenbereichs kann wiederum das Äquivalent zu einer Betätigungskraft für die Handhabe darstellen.

Die Erfindung stellt weiterhin eine Bedien- und/oder Eingabevorrichtung für ein Kraftfahrzeug mit den Merkmalen des Anspruchs 4 bereit. Die Bedien- und/oder Eingabevorrichtung besitzt eine manuell bewegbare, insbesondere in der Art eines Steuerknüppels, eines Joysticks o. dgl. ausgebildete Handhabe. Die Handhabe ist aus einer von mehreren Ausgangspositionen, die innerhalb eines Bereichs um einen Koordinaten-Nullpunkt in der Art einer Nullpunkt- Toleranz und/oder Nullpunkt-Schwelle liegen, in wenigstens einer Verstellrichtung bis zu einer Verstellposition bewegbar. Die Bedien- und/oder Eingabevorrichtung weist ein Signalerzeugungsmittel zur Erzeugung eines zur Bewegung der Handhabe korrespondierenden Signals auf. Das Signal dient insbesondere in der Art eines Schaltsignals in der Verstellposition zum Bedienen und/oder Auslösen einer Funktion und/oder für die Steuerung eines Geräts im Kraftfahrzeug. Des Weiteren ist ein Rückstellmittel für die Rückstellung der Handhabe bei Beendung der Bewegung in eine zufällige Ausgangsposition der innerhalb des Bereichs um den Koordinaten-Nullpunkt liegenden Ausgangspositionen vorgesehen. Schließlich weist die Bedien- und/oder Eingabevorrichtung ein Positionserfassungsmittel zur Ermittlung der Positionskoordinaten für die Bewegung der Handhabe in Bezug auf den Koordinaten-Nullpunkt außerhalb des Bereichs und ein Auswertemittel für die Auswertung der Positionskoordinaten zur Detektierung der Verstellrichtung und/oder der Verstellposition auf. Erfindungsgemäß ermittelt das Positionserfassungsmittel zusätzlich die Positionskoordinaten für die Bewegung der Handhabe innerhalb des Bereichs um den Koordinaten-Nullpunkt. Das Auswertemittel zieht wiederum die zusätzlich ermittelten Positionskoordinaten für die Detektierung der Verstellrichtung und/oder der Verstellposition heran.

Für eine besonders bevorzugte Ausgestaltung der Erfindung ist nachfolgendes festzustellen.

Um beliebige in der Fläche (X-Y-Koordinaten) ausgeführte Bewegungen zu detektieren, werden beispielsweise Eingabegeräte nach dem Prinzip des Steuerknüppels bzw. des Joysticks verwendet. Je nach Präzisionsanforderung werden in kurzen Zeitabständen die X- und Y-Koordinaten des Eingabegerätes ausgelesen und verarbeitet. Nach dem Loslassen des Eingabegerätes soll dieses von alleine wieder an seinen Ursprungspunkt zurückkehren und bereit sein für neue Eingaben.

Bei kleinen Verstellwegen beziehungsweise Messbereichen oder bei hohen Anforderungen zur Haptik, wie zum Beispiel kein fühlbares Einrasten, ist eine mechanische ausreichend präzise Nullpunkt-Rückstellung, d.h. Rückkehr zum Ursprungspunkt, nicht möglich. Der Nullpunkt unterliegt somit einer Streuung und muss daher eine entsprechend hohe Nullpunkt-Schaltschwelle erhalten. Bei kleinen Messbereichen kann dann die Nullpunkt-Schaltschwelle einen großen Teil des Messbereiches aufbrauchen, so dass nur noch ein kleiner Teil des Messbereiches für die Auswertung der Bewegung verbleibt. Sollen im Verlauf der Bewegung zusätzlich noch weitere Schaltschwellen, wie eine Kraftschwelle oder eine Wegschwelle ausgewertet werden, so kann sich der verbleibende Messbereich noch weiter verkleinern.

Es ist somit eine Lösung zu finden, bei der eine exakte Nullpunkt-Rückstellung oder Nullpunkt-Schaltschwelle nicht erforderlich ist. Die mechanische Rückstellung ist dann nur noch dafür erforderlich, dass die nächste Eingabe wieder in alle Richtungen erfolgen und ausgewertet werden kann. Eine solche Aufgabe kann sich prinzipiell auch für Bewegungen im Raum, d. h. bei X-Y-Z-Koordinaten, stellen.

Der erfindungsgemäßen Lösung liegt die Erkenntnis zugrunde, dass in vielen Fällen Folgendes gilt. Je mehr Messwerte verfügbar sind, desto genauer ist das Ergebnis einer Auswertung. Insbesondere bei kleinen Messbereichen, die beispielsweise durch die Wegstrecke oder die Anzahl der Digits definiert sind, und in denen nur wenige Messwerte verfügbar sind, ist es daher von Vorteil, wenn möglichst viele Messwerte für die Bewegungsauswertung genutzt werden. Demgemäß besteht die erfindungsgemäße Lösung in der Nutzung aller Messwerte, auch der innerhalb der Nullpunkt-Schaltschwelle liegenden Messwerte, die bisher nicht ausgewertet werden. Es besteht damit nicht die Notwendigkeit eines definierten absoluten Nullpunkts und/oder einer Nullpunkt-Schaltschwelle. Vielmehr werden alle verfügbaren Messwerte für die Bewegungsauswertung genutzt, auch diejenigen, die bisher innerhalb der Nullpunkt-Schaltschwelle lagen und nicht genutzt wurden. Erfindungsgemäß werden die X-Y-Koordinaten ständig ausgelesen und können fortlaufend auf vorgegebene Muster, wie beispielsweise auf Geraden, analysiert werden. Sobald ein Muster erkannt wird, wird die entsprechende Schaltfunktion ausgelöst. Somit sind ein spezieller Startpunkt, wie beispielsweise ein definierter Nullpunkt und eine Nullpunkt-Schaltschwelle nicht erforderlich. Zur Mustererkennung können Prinzipien und/oder Algorithmen der Bilderkennung übernommen werden. Um beispielsweise eine Gerade zu erkennen, kann ein Korridor definiert werden, innerhalb dessen ein bestimmter Anteil an Messpunkten liegen muss.

Um Muster noch robuster auszuwerten, können Boole'sche UND-Bedingungen erzeugt werden. Beispielsweise wird ein erkanntes Muster, wie eine Gerade, erst dann ausgegeben, wenn die Koordinaten sich über einen bestimmten Koordinatenbereich erstrecken. Ein Kriterium zur Festlegung dieses Koordinatenbereichs kann beispielsweise das Äquivalent zu einer Betätigungskraft darstellen.

Die Erfindung umfasst somit die Nutzung sämtlicher gemessener Positionskoordinaten zur verbesserten Erkennung von Bewegungen. Das erfindungsgemäße Lösungsprinzip ist sowohl für flächen hafte Bewegungen als auch für Bewegungen im Raum, d. h. X-Y-Z-Koordinaten aufweisende Bewegungen, anwendbar.

Nach dem bisherigen Stand der Technik müssen auszuwertende Bewegungen eine so große Auslenkung besitzen, dass jenseits der Nullpunkt-Schaltschwelle genügend auswertbare Messwerte verfügbar sind. Die mit der Erfindung erzielten Vorteile bestehen hingegen insbesondere darin, dass die Erkennung und/oder Auswertung von kleineren Betätigungs-Auslenkungen ermöglicht ist, weil eine Nullpunkt-Schaltschwelle nicht benötigt wird. Vielmehr werden alle Messwerte einer Bewegung ausgewertet und somit bleiben keine Messwerte ungenutzt.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: eine Bedien- und/oder Eingabevorrichtung mit einer bewegbaren Handhabe in schematischer Ansicht,
- Fig. 2: die bisherige Ermittlung der Bewegung der Handhabe und
- Fig. 3: die erfindungsgemäße Ermittlung der Bewegung der Handhabe.

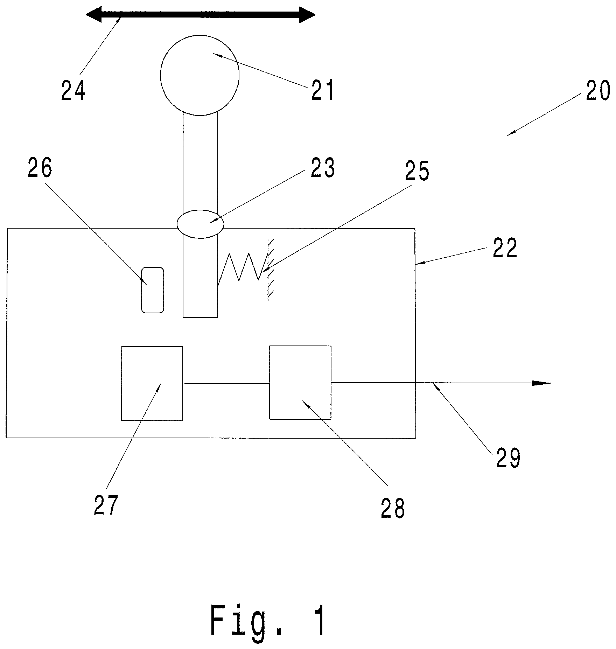

In Fig. 1 ist eine Bedien- und/oder Eingabevorrichtung 20 für ein Kraftfahrzeug mit einer von einem Benutzer manuell bewegbaren Handhabe 21, die in der Art eines Steuerknüppels, eines Joysticks o. dgl. ausgebildet ist, zu sehen. Die Handhabe 21 ragt zur Bewegung durch den Benutzer aus einem Gehäuse 22 heraus. Mittels eines Gelenks 23 ist die Handhabe 21 verstellbar, so dass die Handhabe 21 vom Benutzer aus einer Ausgangsposition in wenigstens eine Verstellrichtung 24 bis zu einer Verstellposition bewegbar ist. Ein auf die Handhabe 21 einwirkendes Rückstellmittel 25, beispielsweise eine Feder, dient für die Rückstellung der Handhabe 21 bei Beendung der Bewegung durch den Benutzer in eine Ausgangsposition.

Im Gehäuse 22 ist ein Positionserfassungsmittel 26 zur Ermittlung der Positionskoordinaten für die Bewegung der Handhabe 21 in Bezug auf einen Koordinaten-Nullpunkt angeordnet. Weiter ist ein Auswertemittel 27 für die Auswertung der Positionskoordinaten zur Detektierung der Verstellrichtung 24 und/oder der Verstellposition für die Handhabe 21 vorgesehen. Schließlich ist noch ein Signalerzeugungsmittel 28 zur Erzeugung eines zur Bewegung der Handhabe 21 entsprechend den ausgewerteten Positionskoordinaten korrespondierenden Signals 29, beispielsweise für die Steuerung eines Geräts im Kraftfahrzeug, vorgesehen. Insbesondere kann das Signal 29 in der Art eines Schaltsignals in der Verstellposition zum Bedienen und/oder Auslösen einer Funktion im Kraftfahrzeug dienen. Beispielsweise kann es sich bei dem Positionserfassungsmittel 26 um einen mit einem Magneten an der Handhabe 21 zusammenwirkenden Hallsensor handeln. Das Auswertemittel 27 sowie das Signalerzeugungsmittel 28 können von einem Mikroprozessor ausgebildet sein.

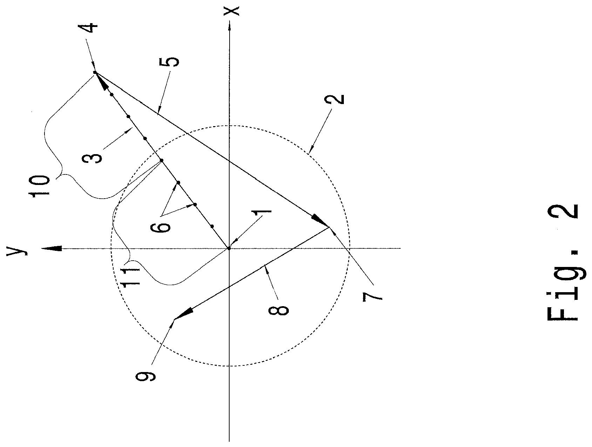

Aufgrund von Toleranzen ist eine Rückstellung der Handhabe 21 in eine bestimmte Ausgangsposition nicht gewährleistet. Vielmehr erfolgt die Rückstellung der Handhabe 21 bei Beendung der Bewegung in eine zufällige Ausgangsposition, wobei diese zufällige Ausgangsposition innerhalb eines, in Fig. 2 dargestellten Bereichs 2 um den Koordinaten-Nullpunkt liegt. Somit ist die Handhabe 21 bei erneuter Bewegung aus einer von mehreren Ausgangspositionen, die innerhalb eines Bereichs um den Koordinaten-Nullpunkt in der Art einer Nullpunkt-Toleranz und/oder Nullpunkt-Schwelle liegen, in die Verstellrichtung bewegbar. Zur Berücksichtigung dieser Toleranzen entsprechend dem Bereich 2 um den Koordinaten-Nullpunkt werden bisher lediglich die Positionskoordinaten für die Bewegung der Handhabe 21 außerhalb des Bereichs 2 vom Positionserfassungsmittel 26 ermittelt und vom Auswertemittel 27 ausgewertet.

Wie anhand der Fig. 2 näher erläutert ist, können mittels der bisherigen Vorgehensweise feinfühlige Bewegungen der Handhabe 21 nicht detektiert werden.

Im ursprünglichen Zustand befindet sich die Handhabe 21 in der Ausgangsposition 1, die in dieser Darstellung mit dem Koordinaten-Nullpunkt identisch ist. Ein erster Verstellweg 3 der Handhabe 21, wobei hier ein idealer, gerader Verstellweg dargestellt ist, besitzt X-Y-Positionskoordinaten 6 und führt bis zur Verstellposition 4. Für den ersten Verstellweg 3 sind somit die Positionskoordinaten im außerhalb des Bereichs 2 liegenden nutzbaren Bereich 10 für die Auswertung verfügbar. Die innerhalb des Bereichs 2 in der Art einer Nullpunkt-Schaltschwelle liegenden Positionskoordinaten befinden sich hingegen im für die Auswertung nichtnutzbaren Bereich 11 des ersten Verstellwegs 3.

Aus der Verstellposition 4 bewirkt das Rückstellmittel 25 eine Rückstellung in eine zufällige weitere Ausgangsposition 7 entlang des Rückwegs 5, wobei die weitere Ausgangsposition 7 innerhalb der Bereichs 2 um den Koordinaten-Nullpunkt liegt und im Allgemeinen von der ursprünglichen Ausgangsposition 1 verschieden ist. Wird anschließend die Handhabe 21 in eine andere Richtung 8 entlang eines zweiten Verstellwegs 8 bis zur Verstellposition 9 bewegt, so ist ersichtlich, dass diese Bewegung der Handhabe 21 nicht detektiert wird, da hier alle Messwerte für die Positionskoordinaten innerhalb der Nullpunkt-Schaltschwelle 2 liegen.

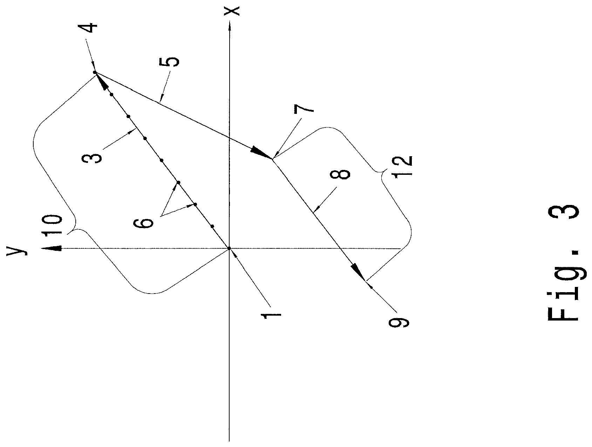

Um solche feinfühligen Bewegungen der Handhabe 21 zu detektieren, ermittelt das Positionserfassungsmittel 26 zusätzlich die Positionskoordinaten für die Bewegung der Handhabe 21 innerhalb des Bereichs 2 um den Koordinaten-Nullpunkt und das Auswertemittel 27 zieht die zusätzlich ermittelten Positionskoordinaten für die Detektierung der Verstellrichtung 24 und/oder der Verstellposition 4, 9 heran. Anhand der Fig. 3 wird diese Vorgehensweise näher erläutert.

Im ursprünglichen Zustand befindet sich die Handhabe 21 wiederum in der mit dem Koordinaten-Nullpunkt identischen Ausgangsposition 1. Der erste, gerade Verstellweg 3 der Handhabe 21 besitzt die X-Y-Positionskoordinaten 6 und führt bis zur Verstellposition 4. Für den ersten Verstellweg 3 sind jedoch die Positionskoordinaten im gesamten Bereich des ersten Verstellwegs 3 als nutzbaren Bereich 10 für die Auswertung verfügbar. Aus der Verstellposition 4 bewirkt das Rückstellmittel 25 eine Rückstellung entlang des Rückwegs 5 wiederum in eine zufällige, im Allgemeinen von der ursprünglichen Ausgangsposition 1 verschiedene weitere Ausgangsposition 7. Wird anschließend die Handhabe 21 wiederum in eine andere Richtung entlang eines zweiten Verstellwegs 8 bis zur Verstellposition 9 bewegt, so wird auch diese Bewegung der Handhabe 21 detektiert, da alle Messwerte für die Positionskoordinaten des gesamten zweiten Verstellwegs 8 als nutzbarer Bereich 12 zur Auswertung herangezogen werden. Die Positionskoordinaten 6 können bei der Bewegung der Handhabe 21 entlang der Verstellwege 3, 8 kontinuierlich und/oder in vorgegebenen Zeitintervallen ermittelt werden. Zwar ist in Fig. 3 als Verstellweg 3, 8 lediglich eine Gerade dargestellt, es können jedoch selbstverständlich auch sonstige Bewegungen der Handhabe 21 vorgesehen sein. Die Auswertung der Positionskoordinaten 6 kann dann fortlaufend auf die Übereinstimmung mit einem vorgegebenen Muster, wie mit einer Geraden, einer stufenartigen Bahn, einer gekrümmten Bahn o. dgl., erfolgen. In diesem Fall wird dann bei Erkennung des Musters durch das Auswertemittel 27 die zum Muster korrespondierende Schaltfunktion mittels des Signalerzeugungsmittels 28 ausgelöst. Für die Erkennung des Musters können Prinzipien und/oder Algorithmen zur Bilderkennung vom Auswertemittel 27 verwendet werden. Ebenso können für die Erkennung des Musters Boole'sche Bedingungen vom Auswertemittel 27 verwendet werden.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann das erfindungsgemäße Betriebsverfahren in vorteilhafterWeise bei allen kraftsensitiven Schaltern und Stellern mit vom Bediener nicht spürbaren, kleinen Verstellwegen eingesetzt werden. Des Weiteren kann die Erfindung nicht nur bei Bedien- und/oder Eingabevorrichtungen in Kraftfahrzeugen sondern auch bei Computern, Maschinen, Hausgeräten o. dgl. Verwendung finden.

### Bezugszeichen-Liste:

- 1:: (ursprüngliche) Ausgangsposition
- 2:: Bereich / Nullpunkt-Schaltschwelle
- 3:: (erster) Verstellweg
- 4:: (erste) Verstellposition
- 5:: Rückweg
- 6:: (X-Y-)Positionskoordinaten
- 7:: weitere Ausgangsposition
- 8:: (zweiter) Verstellweg
- 9:: (zweite) Verstellposition
- 10:: nutzbarer Bereich (für ersten Verstellweg)
- 11:: nichtnutzbarer Bereich (für ersten Verstellweg)
- 12:: nutzbarer Bereich (für zweiten Verstellweg)

- 20:: Bedien- und/oder Eingabevorrichtung
- 21:: Handhabe
- 22:: Gehäuse
- 23:: Gelenk
- 24:: Verstellrichtung
- 25:: Rückstellmittel
- 26:: Positionserfassungsmittel
- 27:: Auswertemittel
- 28:: Signalerzeugungsmittel
- 29:: Signal

## Patentansprüche

1. Verfahren zum Betrieb einer Bedien- und/oder Eingabevorrichtung (20) eines Kraftfahrzeugs mit einer bewegbaren Handhabe (21),
wobei die Handhabe (21) aus einer von mehreren Ausgangspositionen (1, 7), die innerhalb eines Bereichs (2) um einen Koordinaten-Nullpunkt liegen, in wenigstens einer Verstellrichtung (24) bis zu einer Verstellposition (4, 9) bewegbar ist,
wobei ein zur Bewegung der Handhabe (21) korrespondierendes Signal (29) erzeugbar ist,
wobei die Handhabe (21) bei Beendung der Bewegung in eine Ausgangsposition (7) der mehreren innerhalb des Bereichs (2) liegenden Ausgangspositionen (1, 7) rückstellbar ist, und
wobei die Positionskoordinaten für die Bewegung der Handhabe (21) in Bezug auf den Koordinaten-Nullpunkt außerhalb des Bereichs (2) ermittelt und zur Detektierung der Verstellrichtung (24) und/oder der Verstellposition (4, 9) ausgewertet werden,
wobei zusätzlich die Positionskoordinaten für die Bewegung der Handhabe (21) innerhalb des Bereichs (2) ermittelt und für die Auswertung zur Detektierung der Verstellrichtung (24) und/oder der Verstellposition (4, 9) herangezogen werden,
wobei die Positionskoordinaten bei der Bewegung der Handhabe (21) kontinuierlich und/oder in vorgegebenen Zeitintervallen ermittelt werden,
**dadurch gekennzeichnet, dass** die Auswertung der Positionskoordinaten fortlaufend auf die Übereinstimmung mit einem vorgegebenen Muster erfolgt und
bei Erkennung eines Musters eine zum Muster korrespondierende Schaltfunktion ausgelöst wird,
wobei das vorgegebene Muster eine Gerade, eine stufenartige Bahn oder eine gekrümmten Bahn ist.

2. Verfahren zum Betrieb einer Bedien- und/oder Eingabevorrichtung (20) nach Anspruch 1, **dadurch gekennzeichnet, dass** für die Erkennung eines Musters Prinzipien und/oder Algorithmen zur Bilderkennung verwendet werden.

3. Verfahren zum Betrieb einer Bedien- und/oder Eingabevorrichtung (20) nach einem der Ansprüche 1 oder 2, **dadurch gekennzeichnet, dass** für die Erkennung eines Musters Boole'sche Bedingungen verwendet werden.

4. Bedien- und/oder Eingabevorrichtung für ein Kraftfahrzeug mit einer bewegbaren Handhabe (21),
wobei die Handhabe (21) aus einer von mehreren Ausgangspositionen (1, 7), die innerhalb eines Bereichs (2) um einen Koordinaten-Nullpunkt liegen, in wenigstens einer Verstellrichtung (24) bis zu einer Verstellposition (4, 9) bewegbar ist,
wobei ein Signalerzeugungsmittel (28) zur Erzeugung eines zur Bewegung der Handhabe (21) korrespondierenden Signals (29) vorgesehen ist,
wobei ein Rückstellmittel (25) für die Rückstellung der Handhabe (21) bei Beendung der Bewegung in eine Ausgangsposition (7) der mehreren innerhalb des Bereichs (2) liegenden Ausgangspositionen (1, 7) vorgesehen ist, mit einem Positionserfassungsmittel (26) zur Ermittlung der Positionskoordinaten für die Bewegung der Handhabe (21) in Bezug auf den Koordinaten-Nullpunkt außerhalb des Bereichs (2), und mit einem Auswertemittel (27) für die Auswertung der Positionskoordinaten zur Detektierung der Verstellrichtung (24) und/oder der Verstellposition (4, 7),
wobei das Positionserfassungsmittel (26) zusätzlich die Positionskoordinaten für die Bewegung der Handhabe (21) innerhalb des Bereichs (2) ermittelt, und dass das Auswertemittel (27) die zusätzlich ermittelten Positionskoordinaten für die Detektierung der Verstellrichtung (24) und/oder der Verstellposition (4, 9) heranzieht,
wobei das Positionserfassungsmittel (26) ausgebildet ist, die Positionskoordinaten bei der Bewegung der Handhabe (21) kontinuierlich und/oder in vorgegebenen Zeitintervallen zu ermitteln,
**dadurch gekennzeichnet, dass** das Auswertemittel (27) ausgebildet ist, die Auswertung der Positionskoordinaten fortlaufend auf die Übereinstimmung mit einem vorgegebenen Muster auszuwerten und bei Erkennung eines Musters eine zum Muster korrespondierende Schaltfunktion auszulösen,
wobei das vorgegebene Muster eine Gerade, eine stufenartige Bahn oder eine gekrümmten Bahn ist.

## Claims

1. A method for operating a control and/or input device (20) of a motor vehicle with a movable handle (21),
wherein the handle (21) is movable from one of several starting positions (1, 7) which lie within an area (2) around a coordinate zero point in at least one adjustment direction (24) up to an adjustment position (4, 9),
wherein a signal (29) corresponding to the movement of the handle (21) can be generated,
wherein the handle (21), upon termination of the movement, can be reset to a starting position (7) of the several starting positions (1, 7) lying within the area (2), and
wherein the position coordinates for the movement of the handle (21) with regard to the coordinate zero point outside the area (2) are determined and evaluated for detecting the adjustment direction (24) and/or the adjustment position (4, 9),
wherein additionally the position coordinates for the movement of the handle (21) within the area (2) are determined and consulted for the evaluation for detecting the adjustment direction (24) and/or the adjustment position (4, 9),
wherein the position coordinates are determined continuously and/or in predetermined time intervals when moving the handle (21),
**characterised in that** the evaluation of the position coordinates is continuously with regard to correspondence with a predetermined pattern, and
upon recognition of a pattern, a switching function corresponding to the pattern is triggered,
wherein the predetermined pattern is a straight line, a step-like path or a curved path.

2. The method for operating a control and/or input device (20) according to claim 1, **characterised in that** principles and/or algorithms for image recognition are used for recognising a pattern.

3. The method for operating a control and/or input device (20) according to any one of claims 1 or 2, **characterised in that** Boolean conditions are used for recognising a pattern.

4. A control and/or input device for a motor vehicle with a movable handle (21),
wherein the handle (21) is movable from one of several starting positions (1, 7) which lie within an area (2) around a coordinate zero point in at least one adjustment direction (24) up to an adjustment position (4, 9),
wherein a signal generation means (28) for generating a signal (29) corresponding to the movement of the handle (21) is provided, wherein a resetting means (25) for resetting the handle (21) upon termination of the movement to a starting position (7) of the several starting positions (1, 7) lying within the area (2) is provided, with a position sensing means (26) for determining the position coordinates for the movement of the handle (21) with regard to the coordinate zero point outside the area (2) and with an evaluation means (27) for evaluating the position coordinates for detecting the adjustment direction (24) and/or the adjustment position (4, 7),
wherein the position sensing means (26) additionally determines the position coordinates for the movement of the handle (21) within the area (2), and in that the evaluation means (27) consults the additionally determined position coordinates for detecting the adjustment direction (24) and/or the adjustment position (4, 9),
wherein the position sensing means (26) is formed to determine the position coordinates continuously and/or in predetermined time intervals when moving the handle (21),
**characterised in that** the evaluation means (27) is formed to continuously evaluate the evaluation of the position coordinates with regard to correspondence with a predetermined pattern and to trigger a switching function corresponding to the pattern upon recognition of a pattern,
wherein the predetermined pattern is a straight line, a step-like path or a curved path.

## Revendications

1. Procédé de fonctionnement d'un dispositif de commande et/ou d'entrée (20) pour un véhicule automobile doté d'une poignée mobile (21),
dans lequel la poignée (21) est mobile depuis l'une d'une pluralité de positions de départ (1, 7) qui se situent dans une plage (2) autour d'un point zéro de coordonnées, dans au moins une direction de réglage (24) jusqu'à une position de réglage (4, 9),
dans lequel un signal (29) correspondant au mouvement de la poignée (21) peut être généré, dans lequel la poignée (21) peut être réinitialisée à une position de départ (7) de la pluralité de positions de départ (1, 7) se trouvant dans la zone (2) à la fin du mouvement, et
dans lequel les coordonnées de position pour le mouvement de la poignée (21) par rapport au point zéro de coordonnées à l'extérieur de la zone (2) sont déterminées et évaluées pour détecter la direction de réglage (24) et/ou la position de réglage (4, 9),
dans lequel les coordonnées de position pour le mouvement de la poignée (21) dans la zone (2) sont en outre déterminées et utilisées pour l'évaluation afin de détecter la direction de réglage (24) et/ou la position de réglage (4, 9),
dans lequel les coordonnées de position sont déterminées en continu et/ou à des intervalles de temps prédéterminés pendant le mouvement de la poignée (21),
**caractérisé en ce que** l'évaluation des coordonnées de position est effectuée en continu pour vérifier le respect d'un modèle prédéterminé et
lorsqu'un motif est reconnu, une fonction de commutation correspondant au motif est déclenchée,
dans lequel le motif donné est une ligne droite, une trajectoire en escalier ou une trajectoire courbe.

2. Procédé de fonctionnement d'un dispositif de commande et/ou d'entrée (20) selon la revendication 1, **caractérisé en ce que** des principes et/ou des algorithmes de reconnaissance d'image sont utilisés pour la reconnaissance d'un motif.

3. Procédé de fonctionnement d'un dispositif de commande et/ou d'entrée (20) selon l'une des revendications 1 ou 2, **caractérisé en ce que** des conditions booléennes sont utilisées pour la reconnaissance d'un motif.

4. Dispositif de commande et/ou d'entrée pour un véhicule automobile doté d'une poignée mobile (21),
dans lequel la poignée (21) est mobile depuis l'une d'une pluralité de positions de départ (1, 7) qui se situent dans une plage (2) autour d'un point zéro de coordonnées, dans au moins une direction de réglage (24) jusqu'à une position de réglage (4, 9),
dans lequel un moyen de génération de signal (28) est prévu pour générer un signal (29) correspondant au mouvement de la poignée (21),
dans lequel un moyen de rappel (25) est prévu pour ramener la poignée (21) à une position de départ (7) de la pluralité de positions de départ (1, 7) situées dans la zone (2) à la fin du mouvement, avec un moyen de détection de position (26) pour déterminer les coordonnées de position pour le mouvement de la poignée (21) par rapport au point zéro de coordonnées à l'extérieur de la zone (2), et avec un moyen d'évaluation (27) pour évaluer les coordonnées de position afin de détecter la direction de réglage (24) et/ou la position de réglage (4, 7),
dans lequel le moyen de détection de position (26) détermine en outre les coordonnées de position pour le mouvement de la poignée (21) dans la zone (2), et le moyen d'évaluation (27) utilise les coordonnées de position déterminées en plus pour la détection de la direction de réglage (24) et/ou de la position de réglage (4, 9),
dans lequel le moyen de détection de position (26) est conçu pour déterminer les coordonnées de position pendant le mouvement de la poignée (21) en continu et/ou à des intervalles de temps prédéterminés,
**caractérisé en ce que** le moyen d'évaluation (27) est conçu pour évaluer en continu l'évaluation des coordonnées de position afin de vérifier leur conformité avec un modèle prédéterminé et, lors de la reconnaissance d'un modèle, pour déclencher une fonction de commutation correspondant au modèle,
dans lequel le motif donné est une ligne droite, une trajectoire en escalier ou une trajectoire courbe.
